(19) Europäisches Patentamt

European Patent Office

Office européen des brevets

(11) **EP 1 256 142 B1**

(12) **EUROPÄISCHE PATENTSCHRIFT**

(45) Veröffentlichungstag und Bekanntmachung des Hinweises auf die Patenterteilung:
**10.12.2003  Patentblatt 2003/50**

(51) Int Cl.⁷: **H01M 8/10**, H01M 8/04

(21) Anmeldenummer: **01915004.4**

(22) Anmeldetag: **03.02.2001**

(86) Internationale Anmeldenummer:
**PCT/DE01/00442**

(87) Internationale Veröffentlichungsnummer:
**WO 01/061776 (23.08.2001 Gazette 2001/34)**

(54) **ALKALISCHE DIREKT-METHANOL BRENNSTOFFZELLE**

ALKALINE DIRECT METHANOL FUEL CELL

PILE A COMBUSTIBLE ALCALINE A OXYDATION DIRECTE DU METHANOL

(84) Benannte Vertragsstaaten:
**AT BE CH CY DE DK ES FI FR GB GR IE IT LI LU MC NL PT SE TR**

(30) Priorität: **19.02.2000  DE 10007652**

(43) Veröffentlichungstag der Anmeldung:
**13.11.2002  Patentblatt 2002/46**

(73) Patentinhaber: **Forschungszentrum Jülich GmbH 52425 Jülich (DE)**

(72) Erfinder: **DIVISEK, Jiri 52428 Jülich (DE)**

(56) Entgegenhaltungen:
**WO-A-00/16422        WO-A-97/50140
WO-A-98/22989**

- **PATENT ABSTRACTS OF JAPAN vol. 1999, no. 10, 31. August 1999 (1999-08-31) & JP 11 144745 A (ASAHI GLASS CO LTD), 28. Mai 1999 (1999-05-28)**
- **PATENT ABSTRACTS OF JAPAN vol. 013, no. 008 (E-702), 10. Januar 1989 (1989-01-10) & JP 63 218165 A (TOSOH CORP;OTHERS: 01), 12. September 1988 (1988-09-12)**

## Beschreibung

Die Erfindung betrifft eine Brennstoffzelle, insbesondere eine Methanol-Brennstoffzelle, sowie ein Verfahren zum Betreiben dieser Brennstoffzelle.

Eine Brennstoffzelle weist eine Kathode, einen Elektrolyten sowie eine Anode auf. Der Kathode wird ein Oxidationsmittel, z. B. Luft oder Sauerstoff und der Anode wird ein Brennstoff, z. B. Wasserstoff oder Methanol zugeführt.

Verschiedene Brennstoffzellentypen sind bekannt, so beispielsweise die SOFC-Brennstoffzelle (SOFC = solid oxide fuel cell) aus der Druckschrift DE 44 30 958 C1 sowie die PEM-Brennstoffzelle (PEM = proton exchangemembrane) aus der Druckschrift DE 195 31 852 C1.

Die Betriebstemperatur einer PEM-Brennstoffzelle liegt bei ca. 80°C. Eine PEM-Brennstoffzelle kann prinzipiell entweder sauer oder alkalisch sein, je nach der Art der Membran oder des Arbeitsmediums. Üblicherweise bilden sich an der Anode einer PEM-Brennstoffzelle mit einem Protonenleiter in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt. Der Nachteil einer Methanol-Brennstoffzelle mit einem Protonenleiter besteht darin, daß die Protonen unter dem Einfluß des elektrischen Feldes in deren Solvathülle auch Wassermoleküle mit sich tragen. Dieser Elektrophoreseeffekt ist mit einem sehr hohen Drag-Faktor (Anzahl der mittransportierten Wassermoleküle pro Proton) verbunden. Dies bedeutet einerseits, daß zu viel Wasser von der Anode zur Kathode transportiert wird, was sich nachteilig auf die thermische Bilanz auswirkt, andererseits wird Methanol mittransportiert, was im allgemeinen zur Ausbildung eines Mischpotentials an der Kathode und damit zu einer deutlichen Leistungsminderung führt.

Mehrere Brennstoffzellen werden in der Regel zur Erzielung großer elektrischer Leistungen durch verbindende Elemente elektrisch und mechanisch miteinander verbunden. Diese Anordnung wird Brennstoffzellenstapel genannt.

Als Brennstoff kann unter anderem Methan oder Methanol vorgesehen werden. Die genannten Brennstoffe werden durch Reformierung oder Oxidation u. a. in Wasserstoff oder wasserstoffreiches Gas umgewandelt.

Es gibt zwei Typen der Methanol-Brennstoffzelle. Die sogenannte indirekte Methanol-Brennstoffzelle, bei der zuerst in einem vorgeschalteten Verfahrensschritt ein wasserstoffreiches Gasgemisch produziert wird, das in eine Polymerelektrolyt-Brennstoffzelle des üblichen Wasserstofftyps mit anodischem Pt/Ru-Katalysator eingeleitet wird. Diese Verfahrensvariante besteht deshalb aus zwei Stufen: der Gasherstellung und der eigentlichen Brennstoffzelle.

Eine weitere verfahrenstechnisch wesentlich einfachere Variante stellt die sog. Direkt-Methanol-Brennstoffzelle (DMFC) dar, bei der das Methanol ohne verfahrenstechnische Zwischenstufen der Brennstoffzelle direkt zugeführt wird. Diese Zelle hat im Vergleich zu der ersten allerdings den Nachteil, daß die direkte elektrochemische Methanoloxidation ein kinetisch stark gehemmter Vorgang ist, was im Vergleich zu einer Wasserstoffzelle große Verluste an der Zellspannung bedeutet. Auch die besten Ergebnisse der DMFC-Zellen lassen z. Zt. kaum erwarten, daß diese Zellen in klassischer Ausführung mit den indirekten Methanol-Brennstoffzellen konkurrieren können.

Dies liegt zum einen daran, daß sowohl die Methanolpermeationsrate als auch die Wasserverdampfungsenthalpie im Kathodenraum bei den derzeitigen Zellen zu hoch sind. Ferner wäre es aufgrund der unbefriedigenden Methanoloxidationsrate erforderlich, die Betriebstemperatur der Zelle deutlich über 100°C zu halten. Es existiert jedoch kein geeigneter Elektrolyt, der bei Temperaturen über 120°C funktionstüchtig wäre.

Um wirtschaftlich neben der Indirekten Methanolzelle zu bestehen, darf die DMFC im Vergleich zu der indirekten Zelle bei gleicher Stromdichte nur um 100 mV kleinere Spannungen haben (mit MeOH-Permeation), ohne Permeation um 150 mV. Wie die Simulationsergebnisse zeigen, werden die größten Verluste durch die anodische Überspannung verursacht, was auf die sehr irreversible Elektrodenkinetik zurückzuführen ist. Deshalb muß auch die Katalysatorbelegung unwirtschaftlich hoch sein; durch die Methanolpermeation bedingt muß auch die kathodische Katalysatorbelegung zehnmal so hoch sein wie dies bei der Wasserstoffzelle der Fall ist.

Aufgabe der Erfindung ist es, eine Brennstoffzelle, insbesondere einen Brennstoffzellenstapel, für die Umsetzung von Methanol zu schaffen, die effektiv ist und bei dem die vorgenannten Nachteile vermieden werden. Ferner ist es Aufgabe der Erfindung, ein Verfahren zum Betreiben einer solchen Brennstoffzelle zu schaffen.

Die Aufgabe wird gelöst durch eine Brennstoffzelle mit der Gesamtheit der Merkmale des Anspruchs 1 sowie durch einen Brennstoffzellenstapel und durch ein Verfahren gemäß den Nebenansprüchen. Vorteilhafte Ausführungsformen ergeben sich aus den darauf rückbezogenen Unteransprüchen.

Die anspruchsgemäße Methanol-Brennstoffzelle umfaßt einen Anodenraum mit einer Anode, einen Kathodenraum mit einer Kathode sowie eine Membran zwischen Anode und Kathode, die Anionen-leitend ist. Eine Anionenleitende Membran ist für Anionen, wie beispielsweise Hydroxydionen durchlässig. Eine geeignete Membran ist beispielsweise eine Membran auf Basis eines Anionen-leitenden Polymerelektrolyten. Ferner umfaßt die anspruchsgemäße Methanol-Brennstoffzelle ein Mittel zur Leitung von Wasser aus dem Anodenraum zum Kathodenraum. Das erfindungsgemäße Mittel zur Leitung von Wasser ist dabei nicht ausschließlich auf Wasser beschränkt. Das Mittel kann auch weitere Flüssigkeiten zusammen mit Wasser leiten, insbesondere kann das Mittel eine Methanol/Wassermischung vom Anodenraum zum Kathodenraum einer Brennstoffzelle leiten.

In einer vorteilhaften Ausgestaltung der erfindungsgemäßen Brennstoffzelle umfaßt das Mittel zum Leiten von Wasser aus dem Anoden- in den Kathodenraum eine weitere Brennstoffzelle mit einem sauren Elektrolyten, welche zur Abtrennung von Methanol geeignet ist.

Vorteilhaft weist ein erfindungsgemäßer Brennstoffzellenstapel wenigstens zwei Methanol-Brennstoffzellen mit einer Anionen-leitenden Membran sowie eine weitere Brennstoffzelle mit einem sauren Elektrolyten auf.

Mit diesem Brennstoffzellenstapel kann vorteilhaft Methanol besonders effektiv in elektrische Energie umgewandelt werden und zwar in eine Verfahrensvariante, welche auf der Anwendung eines Anionen-leitenden Polymerelektrolyten basiert.

Das Verfahren setzt die Anwendung einer Anionen-leitenden Membran voraus, welche die Hydroxylionen durchläßt. Es darf dann angenommen werden, daß die Ionen kein oder nur wenig Wasser mit sich führen, so daß die zur Hydroxylionen-Bildung erforderlichen Protonen als Wasser der Kathode zugeführt werden müssen, wobei das Produktwasser anodisch gebildet wird. Wegen der Anwendung eines Anionenleiters erzwingt der Chemismus dieses Prozesses somit im Unterschied zu der bisherigen DMFC sowohl bei der Methanoloxidation als auch bei der Sauerstoffreduktion die Elektrochemie im alkalischen Medium. Dies hat jedoch folgende prinzipielle Vorteile:

- Die anodische Methanoloxidation wird durch eine basisch katalysierte Dehydrierung eingeleitet, wobei der gebildete Wasserstoff selbst elektrochemisch aktiv ist. Es ist deshalb zu erwarten, daß die Gesamtkatalyse günstiger abläuft als im sauren Medium.
- Die kathodische Sauerstoffreduktion im alkalischen Medium wird nicht so stark gehemmt wie im sauren. Auch hier können Spannungsgewinne erwartet werden.
- Es wäre sogar möglich, auf Edelmetalle als Katalysatoren zu verzichten. Es kann bei der Methanolelektrode im alkalischen Medium Raney-Ni als Elektrodenmaterial verwendet werden. Bei der Sauerstoffelektrode wären z.B. Ag, Co oder Ni als Katalysatoren denkbar.

In einer alkalische Brennstoffzelle wird zur Bereitstellung der OH⁻-Ionen auf der Kathodenseite Wasser gebraucht. Auf der Anodenseite entsteht Wasser, was aus dem Kreiszyklus entfernt werden muß. Da ein Grenzstrom mit der vollständigen Umsetzung des eingesetzten Methanols kaum denkbar ist, wird im Anodenrest immer Methanol vorhanden sein, was nicht zulässig ist. Das nicht rückführbare Wasser müßte daher als Abgas gereinigt, also von Methanol frei sein, was beispielsweise durch Verdampfung erfolgen könnte. Allerdings verbraucht die Verdampfung eine solche Energiemenge, die den ganzen Prozeß unwirtschaftlich machen würde.

Im Rahmen der Erfindung wird daher eine Kaskaden-Reinigungsschaltung vorgeschlagen, die im folgendem beschrieben wird.

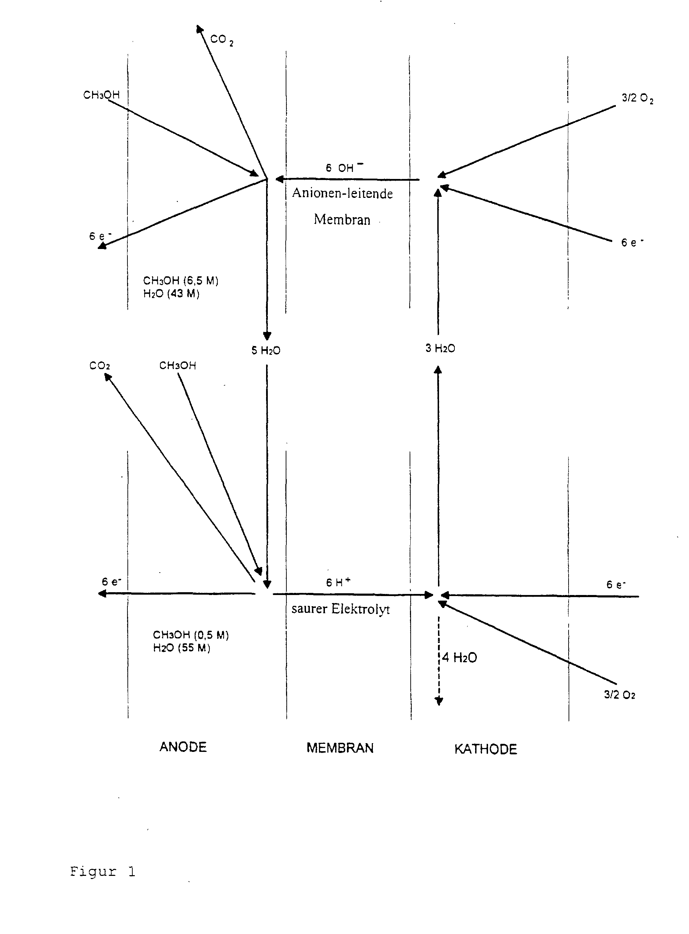

Das Verfahrensschema wird in der Figur 1 dargestellt. Es basiert auf folgenden Reaktionsgleichungen:

$$\text{Anode:} \qquad CH_3OH + 6\,OH^- \rightarrow CO_2 + 5\,H_2O + 6\,e^-$$

$$\text{Kathode:} \qquad 3/2\,O_2 + 3\,H_2O + 6\,e^- \rightarrow 6\,OH^-$$

Das Produktwasser reichert sich im Anodenkreislauf an, aus dem es entfernt werden muß. Dazu wird eine Stack-Kaskadenschaltung vorgeschlagen, die aus zwei Teilen besteht: alkalische Zellen, die das zugeführte Methanol mit hoher Energieausbeute von einer hohen Konzentration (im Bild 1 wird als Beispiel 6,5 M MeOH angenommen) bis auf eine Konzentration von 0,5 M herabsetzen. Bei dieser Konzentration wird dann am Ende der Kaskade eine gewöhnliche protonenleitende DMFC-Zelle zugeschaltet, die das Produktwasser mit einer niedrigeren Energieausbeute, dafür mit einem großen Drag-Koeffizienten aus dem Anodenkreislauf entfernt. Ein Teil des Produktwassers für die Hydroxylionen-Bildung wird den Kathodenräumen der alkalischen Zellen zugeführt.

In Figur 1 wurde dabei als Beispiel angenommen:

MeOH- Konzentration am Kaskaden-Eintritt: 6,5 M
$H_2O$- Konzentration am Kaskaden-Eintritt: 43 M
MeOH- Abreicherung: bis auf 0,5 M, entspricht $H_2O$- Anreicherung auf 55 M.
Drag-Faktor bei der protonischen Zelle bei 90°C: 4,0.

Der Drag-Faktor von 4,0 entspricht der folgenden DMFC-Zellreaktion:

Anode: $CH_3OH + H_2O + 24\ H_2O \rightarrow CO_2 + 6\ [H(H_2O)_4]^+ + 6\ e^-$

Kathode: $6\ [H(H_2O)_4]^+ + 3/2\ O_2 + 6e^- \rightarrow 3\ H_2O + 24\ H_2O$

Wasseraustrag: $24\ H_2O(Anode) \rightarrow 24\ H_2O(Kathode)$

Nach den obigen Gleichungen werden aus dem Anodenraum pro Mol $CH_3OH$ insgesamt 24 Mol $H_2O$ ausgetragen und 2 Mol $H_2O$ elektrochemisch gebildet. Für die elektrochemische Bilanz reichen nur 2 Mol $H_2O$, d.h. 24 Mol $H_2O$ entsprechen der Massenbilanz der alkalischen Zellen. Bei diesen Verhältnissen verarbeiten die alkalischen Zellen 92% des eingesetzten MeOH (Annahme hohe Energieausbeute) und 8% die protonenleitende Zelle. Die stöchiometrische Wasserbilanz der Zellen lautet:

Anode: $5\ H_2O + CH_3OH \rightarrow CO_2 + 6\ H^+ + 6\ e^- + 4\ H_2O$

Kathode: $3/2\ O_2 + 6\ H^+ + 6\ e^- + 4\ H_2O \rightarrow 7\ H_2O$

Das Reaktionsschema erfüllt die Brutto-Reaktionsgleichung der Verbrennungsreaktion des Methanols

$$CH_3OH + 3/2\ O_2 \rightarrow CO_2 + 2\ H_2O$$

und ist somit als DMFC-Reaktionsprozeß geeignet.

**Patentansprüche**

1. Methanol-Brennstoffzelle umfassend einen Anodenraum mit einer Anode, einen Kathodenraum mit einer Kathode, sowie einer zwischen Anode und Kathode befindlichen Membran, **gekennzeichnet durch**

   - eine Anionen-leitende Membran und
   - Mittel zur Leitung von Wasser aus dem Anodenraum zum Kathodenraum.

2. Methanol-Brennstoffzelle nach vorhergehendem Anspruch, bei der das Mittel zur Leitung des Wassers ein Mittel zum Abtrennen von Methanol aufweist.

3. Methanol-Brennstoffzelle nach vorhergehendem Anspruch, mit einer Brennstoffzelle und einem sauren Elektrolyten als Mittel zum Abtrennen von Methanol.

4. Brennstoffzellenstapel umfassend wenigstens zwei Methanol-Brennstoffzellen nach einem der Ansprüche 1 bis 3 und wenigstens eine Methanol-Brennstoffzelle mit einem sauren Elektrolyten als Mittel zum Abtrennen von Methanol.

5. Brennstoffzellenstapel nach vorhergehendem Anspruch, mit einer ersten und einer zweiten Methanol-Brennstoffzelle gemäß einem oder mehrerer der Ansprüche 1 bis 3 und einer weiteren, einen sauren Elektrolyten aufweisenden Methanol-Brennstoffzelle.

6. Verfahren zum Betreiben einer Methanol-Brennstoffzelle nach einem der Ansprüche 1 bis 3 mit den Schritten

   - in dieser Brennstoffzelle gelangen Hydroxylionen von der Kathodenseite zur Anodenseite durch die Anionen-leitende Membran;
   - ein Methanol/Wassergemisch aus dem Anodenraum dieser Brennstoffzelle wird einer weiteren Brennstoffzelle zugeführt;

- Wasser aus dem Kathodenraum einer weiteren Brennstoffzelle wird dem Kathodenraum dieser Brennstoffzelle zugeführt.

7. Verfahren nach vorhergehendem Anspruch, bei dem als eine weitere Brennstoffzelle eine Brennstoffzelle nach einem der Ansprüche 1 bis 3 eingesetzt wird.

8. Verfahren nach einem der vorhergehenden Ansprüche 6 bis 7, bei dem als eine weitere Brennstoffzelle eine Brennstoffzelle mit einem sauren Elektrolyten eingesetzt wird.

9. Verfahren zum Betreiben eines Brennstoffzellenstapels nach einem der Ansprüche 4 bis 5, mit den Schritten

- einer ersten Brennstoffzelle wird Methanol zuge führt;
- jeder weiteren Brennstoffzelle wird das nicht umgesetzte Methanol aus der vorhergehenden Brennstoffzelle zusammen mit Wasser zugeführt;
- ein Teil des Wassers aus dem Anodenkreislauf wird zumindest teilweise den Kathodenräumen der Brennstoffzellen zugeführt.

**Claims**

1. Methanol fuel cell comprising an anode compartment with an anode, a cathode compartment with a cathode, and a partition or membrane located between the cathode and the anode,
   **characterized in that**

   - an anion-conducting partition or membrane and
   - means of conducting water from the anode compartment to the cathode compartment.

2. Methanol fuel cell in accordance with the preceding claim, in which the means of conducting water has a means of separation from methanol.

3. Methanol fuel cell in accordance with the preceding claim, with a fuel cell and an acid electrolyte as means of separation from methanol.

4. Methanol fuel cell comprising at least two methanol fuel cells in accordance with one of claims 1 to 3 and at least one methanol fuel cell with an acid electrolyte as means for separation from water.

5. Fuel cell stack in accordance with the preceding claim, with a first and a second methanol fuel cell in accordance with one or more of claims 1 to 3 and a further methanol fuel cell having an acid electrolyte.

6. Process for operating a methanol fuel cell in accordance with one of claims 1 to 3 with the following stages in which

   - in this fuel cell, hydroxyl ions reach the anode side from the cathode side, through the anion-conducting partition or membrane;
   - a methanol/water mixture from the anode compartment of this fuel cell is supplied to a further fuel cell;
   - water from the cathode compartment of a further fuel cell is fed into the scathode compartment of the fuel cell concerned.

7. Process in accordance with the preceding claim, in which a fuel cell in accordance with one of claims 1 to 3 is used as a further fuel cell.

8. Process in accordance with one of claims 6 and 7, in which a fuel cell with an acid electrolyte is used as a further fuel cell.

9. Process for operating a fuel cell stack in accordance with one of claims 4 and 5, with the following stages in which

   - methanol is fed into a first fuel cell;
   - every further fuel cell has the unconverted methanol from the preceding fuel cell supplied to it together with water;

- a part of the water from the anode circuit is at least partially fed into the cathode compartments of the fuel cells.

**Revendications**

1. Pile à combustible au méthanol comprenant une chambre anodique ayant une anode, une chambre cathodique ayant une cathode, ainsi qu'une membrane se trouvant entre l'anode et la cathode, **caractérisée par**

   - une membrane conductrice des anions et
   - des moyens pour faire passer de l'eau de la chambre anodique à la chambre cathodique.

2. Pile à combustible au méthanol suivant la revendication précédente, dans laquelle les moyens pour faire passer de l'eau comportent un moyen de séparation du méthanol.

3. Pile à combustible au méthanol suivant la revendication précédente, comprenant une pile à combustible et un électrolyte acide comme moyen de séparation du méthanol.

4. Empilement de piles à combustible comprenant au moins deux piles à combustible au méthanol suivant l'une des revendications 1 à 3 et au moins une pile à combustible au méthanol ayant un électrolyte acide comme moyen de séparation du méthanol.

5. Empilement de piles à combustible suivant la revendication précédente, comprenant une première et une deuxième pile à combustible au méthanol suivant l'une ou plusieurs des revendications 1 à 3, et une autre pile à combustible au méthanol ayant un électrolyte acide.

6. Procédé pour faire fonctionner une pile à combustible au méthanol suivant l'une des revendications 1 à 3, comprenant les stades :

   - dans cette pile à combustible, des ions hydroxyle parviennent du côté de la cathode au côté de l'anode en passant à travers la membrane conductrice des anions ;
   - un mélange de méthanol et d'eau est envoyé de la chambre anodique de cette pile à combustible à une autre pile à combustible ;
   - de l'eau provenant de la chambre cathodique d'une autre pile à combustible est envoyée à la chambre cathodique de cette pile à combustible.

7. Procédé suivant la revendication précédente, dans lequel on utilise c omme autre pile à c ombustible une pile à c ombustible s uivant l'une des revendications 1 à 3.

8. Procédé suivant l'une des revendications précédentes 6 à 7, dans lequel on utilise comme autre pile à combustible une pile à combustible ayant un électrolyte acide.

9. Procédé pour faire fonctionner un empilement de piles à combustible suivant l'une des revendications 4 à 5, comprenant les stades :

   - on envoie du méthanol à une première pile à combustible ;
   - on envoie, conjointement avec de l'eau, à chaque autre pile à combustible le méthanol inaltéré provenant de la pile à combustible précédente ;
   - on envoie une partie de l'eau provenant du circuit d'anode au moins en partie aux chambres cathodiques des piles à combustible.

Figur 1